# EUROPEAN PATENT APPLICATION

(11) **EP 1 837 204 A1**
(43) Date of publication of application: **26.09.2007**
(21) Application number: 06250705.8
(22) Date of filing: 09.02.2006
(51) Int. Cl.: B60C 7/10, B60C 7/12

(54) **Non pneumatic tyre for a remotely operated stair-climbing vehicle**

(30) Priority: 09.02.2005 GB 0502605
(71) Applicant: Remotec UK Limited, Manor Park Whitley, Coventry CV3 4LH (GB)
(72) Inventor: Jones, Christopher Peter, Counden Coventry CV5 8LA (GB)
(74) Representative: Downing, Michael Philip

(57) **Abstract**

The present invention discloses a tyre (2) whose stiffness in its radial direction varies around its circumference. Preferably, the tyre (2) is non pneumatic and suitable for a stair-climbing vehicle and its radial stiffness varies so as to allow the tyre (2) to grip one or more stairs (10) in use.
The varying stiffness is effected by a localised reduction in stiffness in discrete zones around the circumference of the tyre.
In one embodiment, the tyre comprises an inner ring of sprockets encased in an outer ring of a resilient material. In another embodiment, the tyre comprises layers of opened cells in the resilient material.
In another embodiment, the tyre is made of bands of aluminium.

## Description

### FIELD OF THE INVENTION

The present invention relates to a tyre and related apparatus for a remotely operated vehicle. In particular, the present invention relates predominantly, but not exclusively, to a tyre that is adapted to cope with undulating terrain such as stairs, kerbs, and rough ground; to wheels fitted with the tyre; and to remotely operated vehicles fitted with such wheels.

### BACKGROUND ART

Before the present invention, it was possible for remotely-operated vehicles to cope with undulating terrain, but in order to obtain the traction required it was necessary to ensure that their tyres were only partially pneumatically filled. The consequence of this is that the tyres then only had a short life span in use.

There remains a need to provide a resilient tyre that can cope with undulating terrain. Stairs and kerbs present difficulties, as does some terrain such as sand, shingle, mud, rough ground and rubble.

### SUMMARY OF THE INVENTION

It is thus an aim of the present invention to provide an improved tyre without the disadvantages of the prior art. Typically, such an improved tyre should allow remotely-operated vehicles to cope with difficult terrain more efficiently.

In a first aspect, the present invention therefore provides a tyre adapted to fit one or more wheels of a remotely operated vehicle whose stiffness in its radial direction varies around its circumference.

Preferably, the tyre is non-pneumatic. That is, it may comprise parts that are not inflated, but are solid although resiliently deformable.

Preferably, the tyre's radial stiffness varies so as to allow the tyre to grip one or more stairs in use. This enables efficient leverage for climbing sets of stairs to be provided.

In one embodiment, the variable stiffness is effected by a localised reduction in stiffness in one or more discrete zones around the circumference of the tyre. Usually, the discrete zones are regularly spaced around the circumference of the tyre. Preferably, each discrete zone is formed of a collapsible area of resilient means.

Typically, the number of discrete zones is:
(a) one or more;
(b) five or more; or
(c) no greater than 100.

In another embodiment, the tyre comprises an inner ring of one or more sprockets encased in an outer ring of a resilient material. The outer ring of resilient material allows the tyre to grip one or more stairs in use, whilst the sprockets encourage the wheel to move so that an adjacent thicker portion of resilient material is engaged with each stair.

In another variation, the one or more inner sprockets may be sandwiched between two or more outer layers of resilient material. Alternatively, the one or more inner sprockets may be arranged beside a single layer of resilient material.

Preferably, the sprockets are composed of polymer and/or the resilient material is rubber.

In another embodiment, a discrete, sprung tooth may pass from each sprocket in a radial direction towards the circumferential edge of the overlying outer ring of resilient material. Here, the sprung tooth is able to move radially to allow the outer surface above the tooth to engage a stair in use.

In yet another embodiment, the one or more collapsible areas include at least one internal compartment within the resilient material. As an internal compartment engages a stair (or other point load) it collapses so as to grip the stair and provide stair climbing leverage.

The at least one compartments may be filled with a material of lower stiffness, or may alternatively be empty.

Preferably, each compartment is adapted to collapse in use as the area around it encounters a point load.

In a second aspect, the present invention provides a wheel comprising a tyre as described above.

In a third aspect, the present invention provides a vehicle comprising a wheel as described above.

### BRIEF DESCRIPTION OF THE DRAWINGS

An embodiment of the present invention will now be described by way of example, with reference to the accompanying figures in which;
Figure 1 shows a side view of a first embodiment of the present invention in which an internal sprocket is encased in an outer layer of resilient material;
Figure 2A illustrates a plan view of a second embodiment in which an inner sprocket is sandwiched between two layers of resilient material;
Figure 2B illustrates a plan view of a related, third embodiment in which an inner sprocket is bounded by a single outer layer of resilient material;
Figure 3 depicts a version of the embodiment shown in Figure 1;
Figure 4 shows a sprung-tooth sprocket arrangement of yet another embodiment;
Figure 5 illustrates an arrangement in which the resilient material comprises inner compartments according to yet another embodiment;
Figure 6 shows a view from the side of a further embodiment of tyre;
Figure 7 shows a view from the side of a related embodiment;
Figure 8 shows a view from the circumference f the embodiment of figures 6 or 7;
Figures 9 and 10 show views of the reaction of the tyres of figures 6 and 7 to flat and point loads respectively; and
Figure 11 shows yet a further embodiment of the present invention.

### DETAILED DESCRIPTION OF THE EMBODIMENTS

In the following description, the embodiments will be described in the context of climbing stairs, a significant problem in the known art. However, it will be appreciated that similar technical difficulties apply to the other contexts discussed above, and it should therefore be understood that the described embodiments are equally applicable to and advantageous in other forms of undulating terrain.

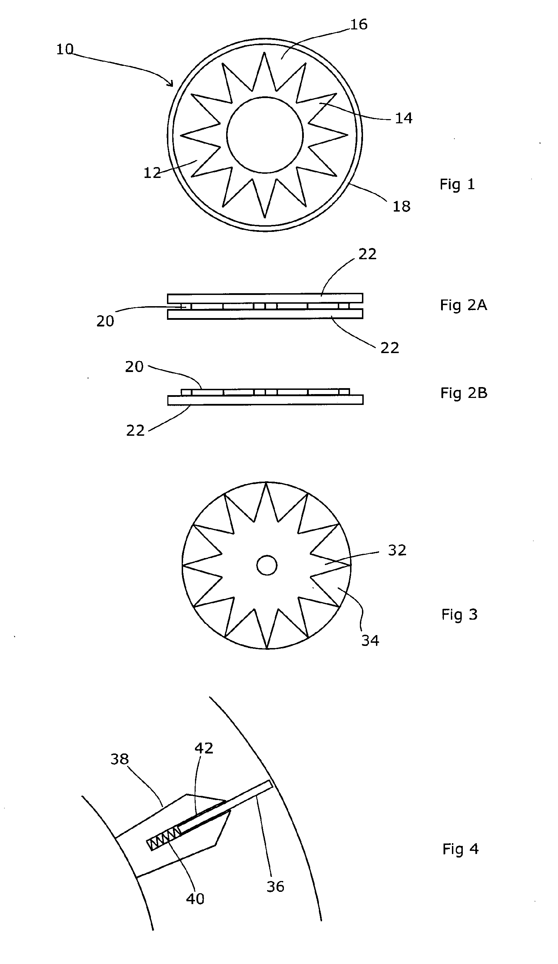

In Figure 1, a wheel 10 is shown having a tyre 12, comprising an inner aluminium sprocket 14 covered in an outer encasement of resilient material 16. In use, when the wheel 10 encounters a stair, the resilient material 16 will deform radially inwards towards the centre of the wheel 10. The tyre 12 will grip the stair if sufficient deformation occurs. This happens when the teeth of the sprocket 14 are aligned such that deformation can continue in between the teeth. If alignment is not so, the wheel 10 will slip around, driven until alignment is correct, and the tyre 12 can grip accordingly.

Thus, when presented with a series of steps, the wheel essentially presents the toothed arrangement of the stiffer aluminium sprockets 14. When running on a flat surface, on the other hand, the wheel can present the softer smooth surface of the resilient material 16. Thus, the wheel has stair-climbing ability but can also provide a smooth ride.

The tyre 12 has a continuous rim formed by a band 18 of resilient material. This provides some circumferential rigidity to the tyre, to offer a smoother ride over flat surfaces.

In another example, shown in Figures 2A and B, the inner sprocket 20 may be either sandwiched between two outer layers of resilient material 22 (see Figure 2A) or bounded by just one such layer (see Figure 2B). Operation of the tyre is the same as described above.

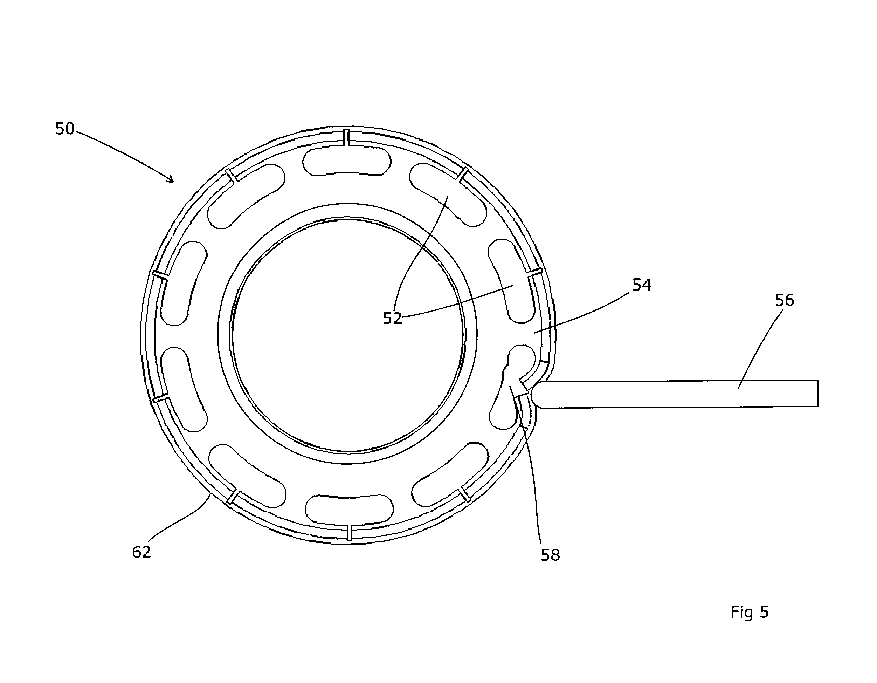

Figure 3 shows a further embodiment in which the sprocket 32 extends right out to the surface of the tyre such that less resilient material 34 is present. This likewise operates in the same manner.

In Figure 4, another arrangement is shown. Here a tooth 36 is attached to a hollow section of the sprocket 38 by a spring means 40 within a channel 42. This tooth 36 will offer some additional resilience when rolling on flat ground but will be circumferentially rigid when engaging the edge of a step by virtue of its location in the channel 42.

The further example illustrated in Figure 5 shows a tyre 50 having a plurality of inner compartments 52. At least an outer section 54 of the tyre is composed of resilient material, in which the compartments 52 are formed. Thus, when the tyre 50 encounters a stair 56, the relevant compartment 58 collapses, thus allowing for deformation of the rim 54 so that the stair 56 may be gripped. Should no compartment be aligned with the stair 56, the tyre 50 will slip until such correct alignment is in fact present.

As shown in figure 5, slits 60 extend from the compartments 52 towards the rim of the tyre. In this case, the slits extend through the outer section 54 but stop short of a circumferential cover 62. These slits may assist in encouraging the described deformation of the tyre. However, in many instances they may be superfluous.

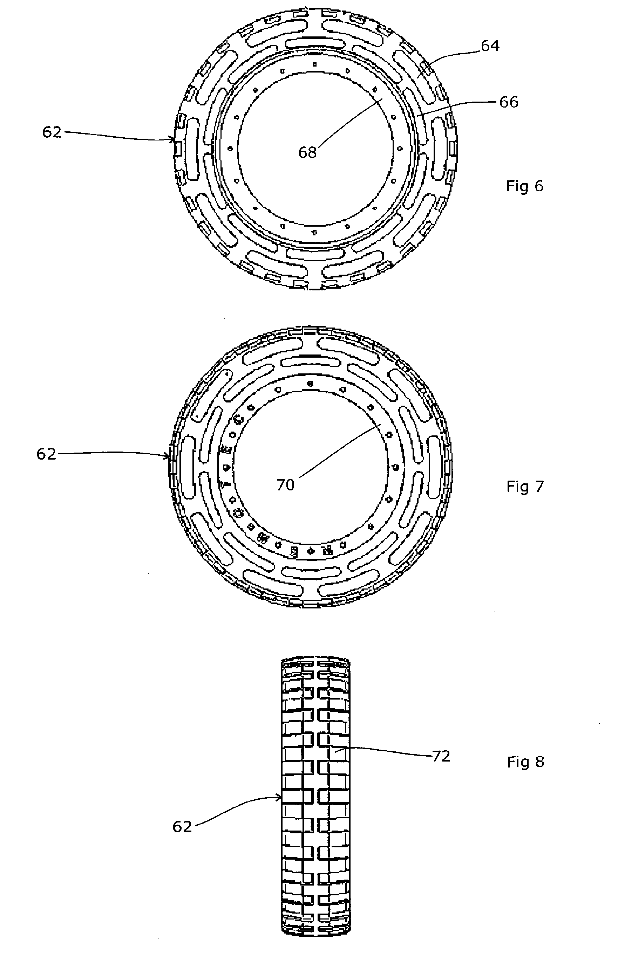

Figures 6 and 7 show a still further embodiment. This resembles the embodiment of figure 5 in that the tyre 62 has compartments within the resilient material, but is distinguished by the compartments being arranged as a number of spaced open 'cells' 64 arranged on a pitch circle close to its outer circumference. A second group of cells 66 are arranged on a smaller pitch circle, positioned ½ of one pitch out from the outer group 64. This allows the web of material left present between the outer cells 64 to collapse into the cavity of the inner cell 66, equalising the compliance of the tyre when rotating and thus transitioning from cell to web. This keeps the vibration induced by the rolling tyre to a minimum.

The number, shape of cells and material hardness may be varied to provide tyres with specific characteristics. In this example, 10 equally spaced cells 64, 66 are provided in each group. However, this could be adjusted as required.

The tyre is moulded around a rigid interface ring or hub 68 that maintains it roundness in operation. Various alternative forms of hub 70 are possible, as shown in figure 7.

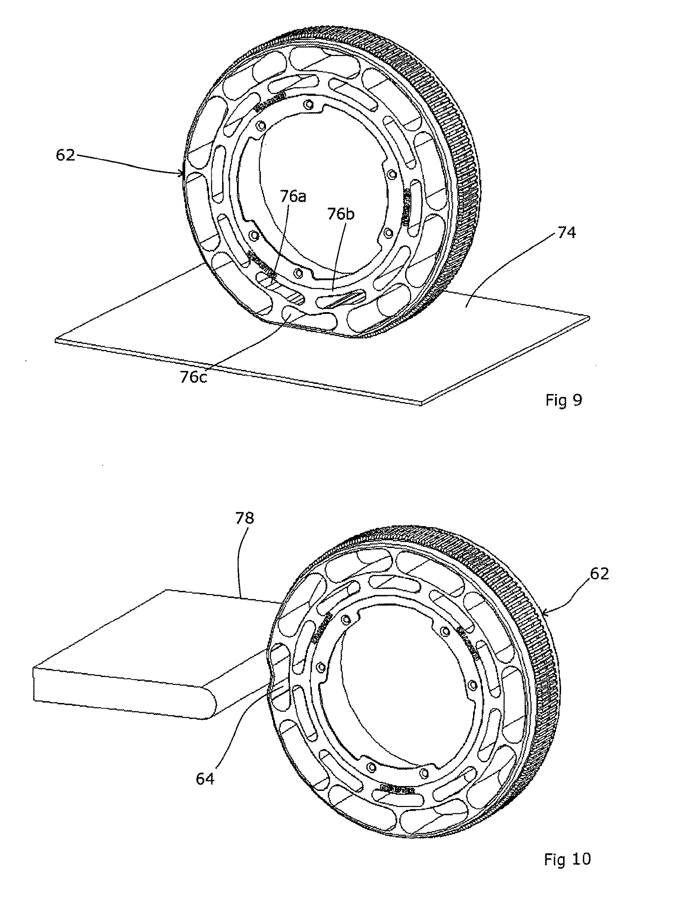

The exterior circumference of the tyre 62 can be provided with a thread pattern 72, as shown in figure 9.

In use, as shown in figures 9 and 10, the tyre can display smoother rolling characteristics due to the double layer of cells 64, 66. Figure 9 shows the tyre 62 on a flat surface 74, with various cells 76a, 76b, 76c being deformed under the load although the aggregate radial stiffness throughout the tyre 62 is generally the same at all circumferential points. As a result, the tyre 62 rolls smoothly.

As shown in figure 10, however, the varying radial stiffness in the outer section of the tyre 62 means that the outer cells 64 thus deform in on themselves when point loads 78 are applied against them, such as stair treads and kerbs. This allows the tyre 62 to grip in a positive manner and gain traction enabling a vehicle to climb the obstacle 78.

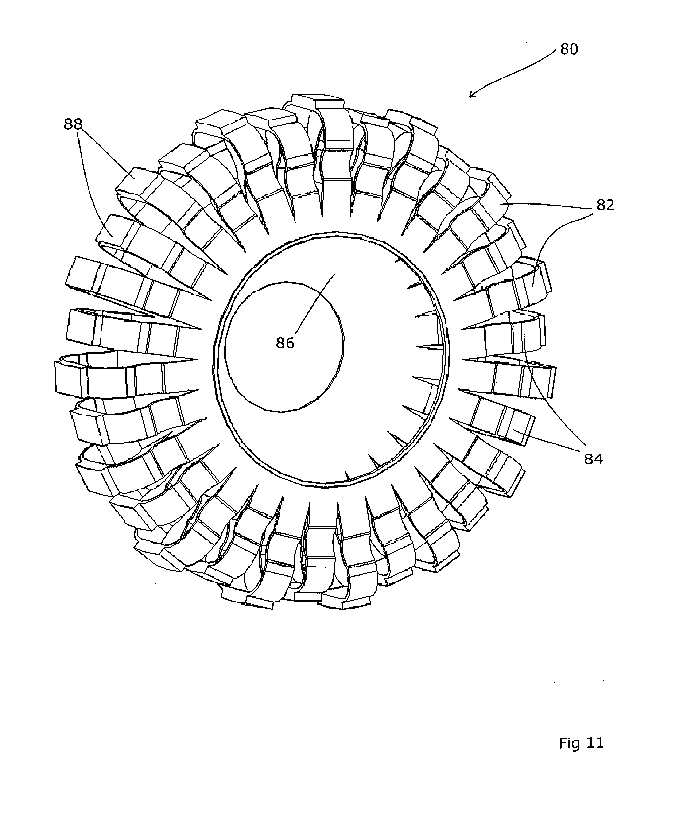

In Figure 11, a further embodiment is shown in which the wheel 80 comprises discrete outer 82 and inner 84 bands of aluminium bent so as to provide some resiliency in their arrangement around a central hub 86. The outermost surfaces of both the outer 82 and inner 84 bands are covered in a layer of more resilient material 88 such as rubber. In use, the inner bands 84 prove to be more deformable than their outer band 82 counterpart by virtue of the different profiles. Thus, when they engage a stair the edge thereof can be gripped between bands.

Thus, the present invention provides a tyre which is simple to construct at minimal cost, yet effectively and efficiently allows vehicles to climb stairs (etc) without the tyre perishing quickly. Preferred embodiments of the tyre are able to;
- Maintain radial compliance (deformation) when climbing kerbs, stairs, and obstacles.
- Increase transverse stiffness, thus reducing tyre roll with respect to the rim when cornering.
- Be impervious to puncture damage.
- Maintain or exceed the vibration-damping characteristics of known tyres.
- Reduce friction when cornering (again attributable to the high transverse stiffness) as compared to low-inflation pneumatic tyres
- Remain unaffected by external pressure changes. (e.g. during or after transportation by air)
- Require little or no maintenance (such as re-inflation).

It will of course be understood that many variations may be made to the above-described embodiment without departing from the scope of the present invention.

## Claims

1. A tyre adapted to fit one or more wheels of a remotely-operated vehicle, comprising a layer whose stiffness in its radial direction varies around its circumference.

2. A tyre according to claim 1, wherein the tyre is non-pneumatic.

3. A tyre according to any one of the preceding claims, wherein its radial stiffness varies so as to allow the tyre to grip one or more undulations in use.

4. A tyre according to any one of the preceding claims, wherein the varying stiffness is effected by a localised reduction in stiffness in one or more discrete zones around the circumference of the tyre.

5. A tyre according to claim 4, wherein the discrete zones are regularly spaced around the circumference of the tyre.

6. A tyre according to either claim 4 or claim 5, wherein the number of discrete zones is:
one or more; or
five or more; and/or
no greater than 100.

7. A tyre according to any one of the preceding claims, wherein the layer comprises an inner ring of one or more sprockets encased in an outer ring of a resilient material.

8. A tyre according to any one of the preceding claims, wherein one or more inner sprockets are sandwiched between two or more outer layers of resilient material.

9. A tyre according to any one of claims 1 to 7, wherein one or more inner sprockets are arranged beside a single layer of resilient material.

10. A tyre according to any one of claims 7 to 9, wherein the sprockets are composed of polymer and/or the resilient material is rubber.

11. A tyre according to any one of claims 7 to 10, wherein from each sprocket a discrete, sprung tooth passes radially towards the circumferential edge of the overlying outer ring of resilient material.

12. A tyre according to any one of claims 4 to 6, wherein each discrete zone is formed of a collapsible area.

13. A tyre according to claim 12, wherein the one or more collapsible areas include at least one internal compartment within the layer.

14. A tyre according to claim 13, wherein the at least one internal compartment communicates via one or more slits with the exterior surface of the layer.

15. A tyre according to either claim 13 or 14, wherein the at least one compartment is filled with a material of lower stiffness.

16. A tyre according to either claim 13 or 14, wherein the at least one compartment is empty.

17. A tyre according to any of claims 14 to 16, wherein each compartment is adapted to collapse in use.

18. A tyre according to any one of the preceding claims in which there are a plurality of layers.

19. A tyre according to claim 18 in which at least two layers of the plurality have a stiffness in their radial direction which varies around the circumference of the tyre, the layers being aligned such that an area of elevated radial stiffness of one layer corresponds to an area of reduced radial stiffness of the other layer.

20. A wheel comprising a tyre according to any preceding claim.

21. A remotely-operated vehicle comprising a wheel according to claim 20.
